# FASCICULE DE BREVET EUROPEEN

(11) **EP 1 396 668 B1**
(45) Date de publication et mention de la délivrance du brevet: **07.12.2005**
(21) Numéro de dépôt: 03292167.8
(22) Date de dépôt: 03.09.2003
(51) Int. Cl.: F16K 31/30, E03F 7/04

(54) **Dispositif de fermeture automatique d'une canalisation d'écoulement d'un liquide dans un canal**
Automatische Absperrvorrichtung eines Durchflusskanals
Automatic shut-off of a flow channel

(30) Priorité: 06.09.2002 FR 0211066
(43) Date de publication de la demande: 10.03.2004
(73) Titulaire: Entreprise la Coccinelle, 95570 Baillet-en-France (FR)
(72) Inventeur: Entreprise la Coccinelle, 95570 Baillet-en-France (FR)
(74) Mandataire: Coester, Jacques Charles

(56) Documents cités:
- WO-A-98/43008
- US-A- 2 081 298
- US-A- 5 979 497

## Description

La présente invention concerne un dispositif de fermeture d'une conduite d'écoulement de liquide dans un canal permettant d'éviter un refoulement du liquide en cas de montée de celui-ci au-dessus du niveau de sortie de la canalisation dans le canal.

Lors d'une montée d'un liquide, tel que de l'eau dans un canal au dessus du niveau de sortie d'une canalisation dans ce canal, l'eau est amenée à refouler dans la canalisation vers l'origine de l'écoulement ce qui est une cause d'inondation.

La technique antérieure a fait connaître des dispositifs à capteurs électriques permettant de commander la fermeture de la canalisation lors d'une telle montée de l'eau. Cependant, de tels dispositifs ne sont pas fiables et reposent notamment sur une fourniture d'énergie électrique qui peut faire défaut.

La présente invention concerne ainsi un dispositif de fermeture automatique sans l'aide d'énergie électrique d'une canalisation d'écoulement de liquide par simple action de la montée du liquide, le dispositif revenant automatiquement dans sa position permettant l'écoulement du liquide lorsque le liquide baisse en dessous du niveau de sortie de la canalisation dans le canal.

Un tel dispositif est connu de WO 98/43008 qui représente l'état de la technique antérieur le plus proche.

Conformément à l'invention, le dispositif de fermeture automatique d'une canalisation d'écoulement d'un liquide dans un canal présentant une paroi de délimitation latérale munie d'une ouverture communiquant avec ladite canalisation pour l'écoulement du liquide dans le canal est caractérisé en ce qu'il comprend un tube avantageusement vertical traversant la canalisation, un piston mobile dans ledit tube entre une position basse de dégagement de la canalisation et une position haute d'obturation, une chambre en dessous du piston dans sa position basse communique avec le canal par un orifice situé en dessous de l'ouverture de façon que le piston se déplace sous l'action du liquide présent dans la chambre de sa position basse de dégagement vers sa position haute d'obturation lorsque le liquide dans le canal dépasse un minimum prédéterminé de refoulement du liquide du canal dans la canalisation.

Selon d'autres caractéristiques avantageuses de l'invention :
- l'orifice est situé à une hauteur plus basse que la partie inférieure du piston en position basse et correspondant par exemple à la hauteur d'étiage du liquide dans le canal ;
- des moyens sont prévus pour limiter la course du piston de sa position haute à sa position basse ;
- une chambre est formée dans le tube au-dessus du piston en position haute et communique avec l'atmosphère ;
- un ressort est prévu pour s'appuyer sur le piston en tendant à repousser le piston en position basse ;
- le ressort présente une force de rappel empêchant le début d'obturation de la canalisation avant que le niveau du liquide dans le canal dépasse la valeur de refoulement précitée ;
- des moyens de réglage de la force de rappel du ressort sont prévus à l'extérieur du tube ;
- le piston est relié à une tige de guidage du piston dans le tube coopérant éventuellement avec un plat de guidage monté dans le tube ;
- la tige de guidage du piston est creuse et délimite un logement pour le ressort ;
- le piston présente une masse formant une force de rappel empêchant le début d'obturation de la canalisation avant que le niveau du liquide dans le canal dépasse la valeur de refoulement précitée ;
- des moyens sont prévus pour assurer l'étanchéité entre le piston et le tube.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 montre le dispositif selon l'invention dans sa position d'écoulement d'un liquide dans le canal ; et
- la figure 2 montre le dispositif selon l'invention dans sa position d'obturation du passage d'écoulement du liquide.

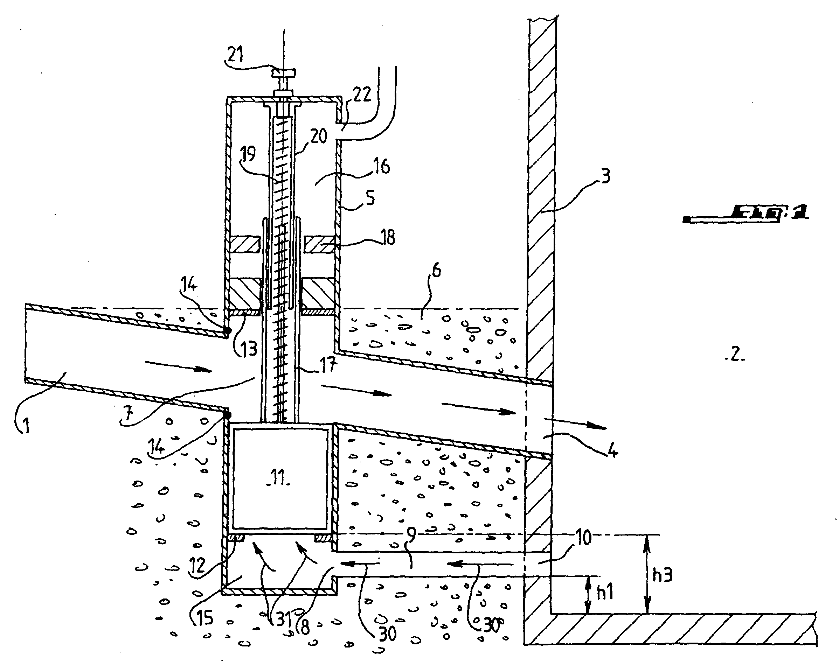

A la figure 1, on a représenté une canalisation 1 d'écoulement d'un liquide tel que de l'eau dans un canal 2. Le canal 2 est ici supposé avoir été réalisé en ciment en présentant une paroi de délimitation latérale munie d'une ouverture 4 pour l'écoulement dans le canal 2 du liquide sortant de la canalisation 1.

Un tube avantageusement vertical 5 est disposé dans un terrain 6 ou dans un puits formant regard à proximité de la paroi 3 du canal et traverse la canalisation 1 en étant coupé par celle-ci. Le tube 5 délimite ainsi dans la canalisation 1 un passage 7 traversé par le liquide. Le tube vertical 5, qui est fermé à son extrémité inférieure, présente de préférence à proximité de cette extrémité une ouverture 8 qui communique, par un conduit 9, avec un orifice 10 percé dans la paroi 3 du canal. Conformément à l'invention, l'orifice 10 est formé à une hauteur h1 correspondant à la hauteur d'étiage du liquide dans le canal 2.

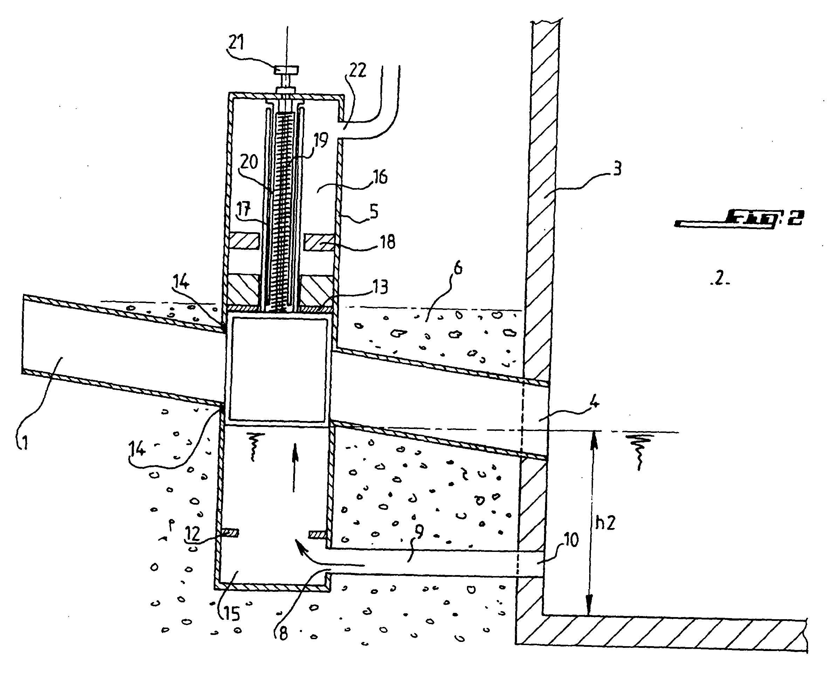

Un piston 11 est prévu dans le tube 5 pour pouvoir se déplacer dans ce tube entre une position basse où il repose sur des appuis inférieurs 12 en dégageant le passage et une position haute (figure 2) où il repose sur des appuis supérieurs 13 dans une position où il obture le passage 7 en empêchant au liquide de refouler dans la canalisation 1 lorsqu'il atteint une hauteur h2. Un élément d'étanchéité 14 est de préférence prévu sur la paroi interne du tube 5 pour assurer l'étanchéité entre le piston 11 et le tube, et ce piston présente évidemment une hauteur au moins égale au diamètre du passage 7.

Le piston 11 délimite ainsi avec le tube 5 une chambre 15 en dessous du piston 11 en position basse et une chambre 16 au-dessus du piston 11 en position haute.

De manière à assurer un guidage du piston 11 à l'intérieur du tube 5, le piston 11 est muni, à sa partie supérieure, d'une tige verticale 17 pouvant coopérer en glissement avec un plat de guidage 18 monté dans le tube 5.

Bien que cela ne soit pas obligatoire, conformément à l'invention et comme on le verra plus loin en liaison avec le fonctionnement de l'ensemble du dispositif, un ressort 19 est de préférence prévu pour s'appuyer d'une part sur la partie supérieure du tube 5 et d'autre part sur le piston 11. Le ressort 19 est ainsi destiné à s'opposer à la montée du piston 11 sous l'effet du liquide en ralentissant cette montée. Le ressort 19 est par ailleurs monté dans un bout de tube 20 lui-même fixé à la partie supérieure du tube 5 et disposé à l'intérieur de la tige 17 du piston qui est alors creuse de sorte que celle-ci coulisse dans le bout de tube 20 lorsque le piston 11 se déplace à l'intérieur du tube 5. Des moyens 21 actionnables depuis l'extérieur du tube 5 sont en outre prévus pour régler la raideur du ressort 19 et la force de rappel qu'il exerce sur le piston de façon à régler son action avec une forme inférieure à la poussée du liquide dans le tube 5.

Dans la réalisation représentée, la chambre supérieure 16 du tube 5 est ouverte en 22 à l'atmosphère pour permettre un équilibrage de la pression de cette chambre avec l'atmosphère, et pour éviter une mise en pression de l'air se trouvant dans cette chambre, ce qui aurait pour effet de bloquer la montée du piston 11 sous la poussée du liquide.

Après avoir décrit le dispositif selon l'invention, on indique ci-après comment celui-ci fonctionne.

Lorsque le liquide dans le canal 2 reste en dessous de la hauteur h1, c'est-à-dire ne dépasse pas la hauteur d'étiage, le dispositif est dans la position de repos de la figure 1 et le liquide peut s'écouler librement depuis la canalisation 1 dans le canal 2 à travers le passage 7 et l'ouverture 4.

Dès que la hauteur du liquide dépasse h1, une certaine quantité de liquide passe du canal 2 dans la chambre inférieure 15 à travers le conduit 9 en suivant les flèches 30. Cependant, le dispositif reste dans cette position de repos au moins jusqu'à ce que le liquide se trouvant dans le canal dépasse une hauteur h3. En effet, pour cette hauteur, l'eau ayant passé dans la chambre 15 atteint le bas du piston 11 en suivant les flèches 31 et tend à soulever ce piston en s'opposant au poids du piston et à la force du ressort 19 lorsque celui-ci est prévu.

On comprendra aisément que si on ne prévoit pas le ressort 19, le piston 11 suivra, à partir de h3, la hauteur du liquide dans le canal en supposant évidemment que le piston 11 soit réalisé de manière à pouvoir flotter sur le liquide. Afin de s'opposer à la pression de l'eau qui agit sur le piston 11, on peut prévoir, en plus du ressort 19 ou à la place de celui-ci, une masse d'équilibrage à la poussée du liquide dans le tube 5.

Conformément à l'invention, on préfère que le piston 11 soit muni du ressort 19, ou que ce piston présente une masse telle que soit créé, dès que le piston 11 monte sous l'effet du liquide, une force de rappel empêchant le début d'obturation de la canalisation avant que le liquide dans cette canalisation atteigne une hauteur telle que le liquide dans le canal refoule dans la canalisation.

Ainsi, pour la hauteur h2 mentionnée précédemment (figure 2) où, en l'absence du dispositif selon l'invention, une partie du liquide contenu dans le canal 2 refoulera dans la conduite 1 à travers l'ouverture 4, le piston 11 viendra en position haute en butée contre les appuis supérieurs 13. Dans cette position le piston 11 obstrue complètement le passage 7 de la figure 1 en empêchant tout refoulement du liquide depuis le canal 2 vers l'origine de cet écoulement.

On comprend que, par un étalonnage approprié de la raideur du ressort 19 ou par un réglage de celle-ci à l'aide du moyen de réglage 21, et/ou par un réglage du poids du piston 11 par exemple à l'aide de la masse d'équilibrage mentionnée plus haut, il soit possible de régler la hauteur h2 pour laquelle le piston obture complètement le passage 7 et empêche tout refoulement du liquide du canal à travers l'ouverture 4, l'étanchéité entre le piston 11 et le tube 5 étant alors assurée par l'élément d'étanchéité 14.

Comme on l'a vu plus haut, en l'absence du ressort 19, il est possible de prévoir le piston 11 pour que celui-ci suive sensiblement la montée du liquide dans le canal jusqu'à ce que sa partie supérieure atteigne les appuis supérieurs 13.

Ainsi, et dans tous les cas, tant que le niveau du liquide dans le canal 2 est supérieur à h2, le dispositif selon l'invention reste dans la position active de la figure 2.

Lorsque le niveau du liquide dans le canal baisse en dessous de la hauteur h2, le piston 11 descend, de son propre poids, et/ou sous l'action du ressort qui s'oppose alors au frottement du piston 11 sur les parois internes du tube 5 et tend à rejeter le liquide se trouvant sous le piston et l'amener dans le canal 2 à travers le conduit 9 dans la direction contraire aux flèches 30 de la figure 1. Au plus tard pour la hauteur h3, le piston 5 vient en position basse en butée contre les appuis inférieurs 12 selon la figure 1, c'est-à-dire dans la position de repos du dispositif.

Cependant, dans le cas où le piston 11 est soumis à l'action du ressort 19 ou si son poids le rend notablement plus dense que le liquide, la position de repos peut évidemment être atteinte avant que le niveau du liquide dans le canal atteigne la hauteur h3. Seule reste alors au fond de la chambre inférieure 15 une petite couche de liquide, mais ce liquide n'aura pas d'influence sur le fonctionnement du dispositif qui est prêt à agir à nouveau et à fermer automatiquement, sans l'aide d'énergie électrique, la conduite d'écoulement 1, par une simple action de la montée du liquide au plus tard lorsque le liquide monte au-dessus du niveau de sortie de la canalisation dans le canal, cette fermeture étant, comme on l'a vu plus haut, nécessaire pour éviter un refoulement du liquide vers l'origine de l'écoulement.

Dans ce qui précède le terme "canal" s'applique à tout type de moyen de passage de liquide, tel que par exemple une conduite d'eau.

## Revendications

1. Dispositif de fermeture automatique d'une canalisation (1) d'écoulement d'un liquide dans un canal (2) présentant une paroi de délimitation latérale (3) munie d'une ouverture (4) communiquant avec ladite canalisation pour l'écoulement du liquide dans le canal, **caractérisé en ce qu'**il comprend un tube avantageusement vertical (5) traversant la canalisation, un piston (11) mobile dans le tube entre une position basse de dégagement de la canalisation et une position haute d'obturation, une chambre (15) en dessous du piston (11) dans sa position basse communique avec le canal par un orifice (10) situé en dessous de l'ouverture (4) de façon que le piston (11) se déplace sous l'action du liquide présent dans la chambre (15) de sa position basse de dégagement vers sa position haute d'obturation lorsque l'eau dans le canal dépasse un minimum prédéterminé de refoulement du liquide du canal dans la canalisation.

2. Dispositif selon la revendication 1, **caractérisé en ce que** l'orifice (10) est situé à une hauteur (h1) plus basse que la partie inférieure du piston en position basse et correspondant par exemple à la hauteur d'étiage du liquide dans.le canal.

3. Dispositif selon l'une des revendications 1 ou 2, **caractérisé en ce que** des moyens (12, 13) sont prévus pour limiter la course du piston (11) de sa position haute à sa position basse.

4. Dispositif selon l'une des revendications 1 à 3, **caractérisé en ce qu'**une chambre (16) est formée dans le tube (5) au-dessus du piston (11) en position haute et communique avec l'atmosphère (en 22).

5. Dispositif selon l'une des revendications 1 à 4, **caractérisé en ce qu'**un ressort (19) est prévu pour s'appuyer sur le piston (11) en tendant à repousser le piston en position basse.

6. Dispositif selon la revendication 5, **caractérisé en ce que** le ressort présente une force de rappel empêchant le début d'obturation de la canalisation avant que le niveau du liquide dans le canal dépasse la valeur de refoulement précitée.

7. Dispositif selon l'une des revendications 5 ou 6, **caractérisé en ce que** des moyens de réglage de la force de rappel du ressort (19) sont prévus à l'extérieur du tube (5).

8. Dispositif selon l'une des revendications 1 à 7, **caractérisé en ce que** le piston (11) est relié à une tige (17) de guidage du piston dans le tube coopérant éventuellement avec un plat de guidage (18) monté dans le tube.

9. Dispositif selon la revendication 8 et une des revendications 5 à 7, **caractérisé en ce que** la tige de guidage (17) du piston (11) est creuse et délimite un logement pour le ressort (19).

10. Dispositif selon l'une des revendications 1 à 9, **caractérisé en ce que** le piston présente une masse formant une force de rappel empêchant le début d'obturation de la canalisation avant que le niveau du liquide dans le canal dépasse la valeur de refoulement précitée.

11. Dispositif selon l'une des revendications 1 à 10, **caractérisé en ce que** des moyens (14) sont prévus pour assurer l'étanchéité entre le piston (11) et le tube (5).

## Patentansprüche

1. Vorrichtung zum automatischen Verschließen einer Rohrleitung (1) für den Abfluß einer Flüssigkeit in einen Kanal (2), mit einer seitlichen Begrenzungswand (3), die eine mit der Rohrleitung für den Abfluß der Flüssigkeit in den Kanal verbundene Öffnung (4) aufweist,
**dadurch gekennzeichnet,**
**daß** sie ein vorteilhafterweise vertikales, durch die Rohrleitung hindurch führendes Rohr (5), einen in dem Rohr zwischen einer unteren Position zum Freigeben der Rohrleitung und einer oberen Position zum Verschließen der Rohrleitung beweglich angeordneten Kolben (11) sowie eine Kammer (15) unterhalb des Kolbens (11) in seiner unteren Position umfaßt, die mit dem Kanal über einen unterhalb der Öffnung (4) angeordneten Einlaß (10) so verbunden ist, daß sich der Kolben (11) unter der Wirkung der in der Kammer (15) vorhandenen Flüssigkeit von seiner unteren Freigabeposition in seine obere Verschlußposition bewegt, wenn das Wasser im Kanal eine vorbestimmte minimale Stauhöhe der Flüssigkeit des Kanals in der Rohrleitung übersteigt.

2. Vorrichtung nach Anspruch 1, **dadurch gekennzeichnet, daß** sich der Einlaß (10) auf einer Höhe (h1) unterhalb des Unterteils des Kolbens in der unteren Position befindet, die z. B. der Höhe des Niedrigststandes der Flüssigkeit im Kanal entspricht.

3. Vorrichtung nach einem der Ansprüche 1 oder 2, **dadurch gekennzeichnet, daß** Mittel (12, 13) zum Begrenzen des Hubs des Kolbens (11) von seiner oberen in seine untere Position vorgesehen sind.

4. Vorrichtung nach einem der Ansprüche 1 bis 3, **dadurch gekennzeichnet, daß** in dem Rohr (5) oberhalb des Kolbens (11) in seiner oberen Position eine Kammer (16) gebildet ist, die mit der Außenluft (bei 22) verbunden ist.

5. Vorrichtung nach einem der Ansprüche 1 bis 4, **dadurch gekennzeichnet, daß** eine Feder (19) vorgesehen ist, um sich auf dem Kolben (11) abzustützen und die die Neigung hat, den Kolben in seine untere Position zurückzudrücken.

6. Vorrichtung nach Anspruch 5, **dadurch gekennzeichnet, daß** die Feder eine Rückstellkraft aufweist, die den Beginn des Verschließens der Rohrleitung so lange verhindert, bis der Pegel der Flüssigkeit im Kanal den zuvor genannten Stauwert überschreitet.

7. Vorrichtung nach einem der Ansprüche 5 oder 6, **dadurch gekennzeichnet, daß** die Mittel zur Einstellung der Rückstellkraft der Feder (19) außerhalb des Rohrs (5) vorgesehen sind.

8. Vorrichtung nach einem der Ansprüche 1 bis 7, **dadurch gekennzeichnet, daß** der Kolben (11) mit einer Stange (17) zur Führung des Kolbens in dem Rohr verbunden ist, die gegebenenfalls mit einem im Rohr angebrachten flachen Führungselement (18) zusammenwirkt.

9. Vorrichtung nach Anspruch 8 und einem der Ansprüche 5 bis 7, **dadurch gekennzeichnet, daß** die Führungsstange (17) des Kolbens (11) hohl ist und eine Aufnahme für die Feder (19) begrenzt.

10. Vorrichtung nach einem der Ansprüche 1 bis 9, **dadurch gekennzeichnet, daß** der Kolben eine Masse aufweist, die eine Rückstellkraft bewirkt, die den Beginn des Verschließens der Rohrleitung so lange verhindert, bis der Pegel der Flüssigkeit im Kanal den zuvor genannten Stauwert überschreitet.

11. Vorrichtung nach einem der Ansprüche 1 bis 10, **dadurch gekennzeichnet, daß** Mittel (14) zur Herstellung der Dichtigkeit zwischen dem Kolben (11) und dem Rohr (5) vorgesehen sind.

## Claims

1. Arrangement for the automatic shut-off of a conduit (1) for the outflow of a liquid into a duct (2), which duct (2) has a lateral boundary wall (3) which is fitted with an opening (4) which, for the outflow of the liquid into the duct, communicates with said conduit, **characterised in that** it comprises a tube (5), advantageously vertical, which passes through the conduit, a piston (11) which is movable in the tube between a low position in which the conduit is clear and a high blocking-off position, a chamber (15) below the piston (11) communicating, when the latter is in its low position, with the duct via an orifice (10) which is situated below the opening (4), so that the piston (11) moves, under the prompting of the liquid present in the chamber (15), from its low clearing position towards its high blocking-off position when the water in the duct exceeds a predetermined minimum backflow of liquid from the duct into the conduit.

2. Arrangement according to claim 1, **characterised in that** the orifice (10) is situated at a height (h1) which is lower than the bottom part of the piston when the latter is in the low position and which corresponds for example to the lowest height of the liquid in the duct.

3. Arrangement according to either of claims 1 and 2, **characterised in that** means (12, 13) are provided to limit the travel of the piston (11) from its high position to its low position.

4. Arrangement according to one of claims 1 to 3, **characterised in that** a chamber (16) is formed in the tube (5), above the piston (11) when the latter is in the high position, and communicates with the atmosphere (at 22).

5. Arrangement according to one of claims 1 to 4, **characterised in that** a spring (19) is provided to press against the piston (11), tending in so doing to thrust the piston back into the low position.

6. Arrangement according to claim 5, **characterised in that** the spring has a return force which prevents the blocking off of the conduit from starting being before the level of the liquid in the duct exceeds the above-mentioned amount of backflow.

7. Arrangement according to either of claims 5 and 6, **characterised in that** means for setting the return force from the spring (19) are provided on the outside of the tube (5).

8. Arrangement according to one of claims 1 to 7, **characterised in that** the piston (11) is connected to a rod (17) for guiding the piston in the tube, which rod (17) possibly co-operates with a flat guiding member (18) mounted in the tube.

9. Arrangement according to claim 8 and one of claims 5 to 7, **characterised in that** the rod (17) for guiding the piston (11) is hollow and defines a housing for the spring (19)

10. Arrangement according to one of claims 1 to 9, **characterised in that** the piston is of a mass, which produces a return force, which prevents the blocking off of the conduit from starting before the level of the liquid in the duct, exceeds the above-mentioned amount of backflow.

11. Arrangement according to one of claims 1 to 10, **characterised in that** means (14) are provided to ensure that there is a seal between the piston (11) and the tube (5).
